# EUROPEAN PATENT SPECIFICATION

(11) **EP 1 256 469 B1**
(45) Date of publication and mention of the grant of the patent: **29.04.2009**
(21) Application number: 02009837.2
(22) Date of filing: 02.05.2002
(51) Int. Cl.: B60H 1/00

(54) **Actuated element assembly**
Aktuatormontage
Montage d'actionneur

(30) Priority: 10.05.2001 LU 90773
(43) Date of publication of application: 13.11.2002
(73) Proprietor: Delphi Technologies, Inc., Troy, MI 48007 (US)
(72) Inventor: Lahier, Gilbert, 8379 Kleinbettingen (LU)
(74) Representative: Robert, Vincent

(56) References cited:
- DE-A- 19 746 185
- DE-A- 19 849 103
- US-A- 5 777 410

## Description

### Field of the invention

The present invention generally relates to an actuated element assembly.

### Background of the invention

Such an actuated element assembly is typically found in a car's Heating, Ventilation and Air Conditioning module (or HVAC module), the module which allows to control air flow and temperature within the car.

An HVAC module generally takes the form of a casing, which is connected to a fresh air inlet and which comprises the various elements needed to control air temperature and air flow, such as e.g. regulating electronics, blower motor, fan, heater, etc. The HVAC module is further connected to air ducts leading to air nozzles in the car. Dispatching of heated or cooled air between the various air ducts is achieved by means of pivotable flaps mounted in the casing.

Typically such flaps comprise two shaft portions which are rotatably supported in plain bearings in the walls of the casing. Actuation of a flap is carried out by means of an actuator having an output shaft that is inserted into a recess in one of the shaft portions from the outside of the casing, the output shaft and the recess in the shaft portion having interlocking shapes so as to obtain a rotational coupling. The actuator is further provided with e.g. two fixing tabs, which are to be aligned with two stays on the casing and screwed thereto in order to fix the actuator to the casing.

A disadvantage of such a structure is that its assembly is difficult, in particular when the dimensional tolerances of the various elements are not close enough. Indeed, the output shaft of the actuator must be aligned with the cavity in the shaft portion of the flap, while it is also necessary to align the fixing tabs with the stocks so as to fix the actuator. However, it often happens that once the output shaft has been inserted into the shaft portion of the flap, the tabs are not properly aligned with the stocks on the casing.

DE 196 20 749 describes a compact HVAC flap assembly, wherein to gain space the actuator is integrated inside a pocket in the flap.

### Object of the invention

The object of the invention is to provide a simpler assembly for an actuatable element, in which alignment problems are alleviated. This object is achieved by an actuated element assembly as claimed in claim 1.

### Summary of the invention,

An actuated element assembly in accordance with the invention comprises an actuatable element mounted in a casing, the actuatable element comprising a first shaft portion rotatably mounted in the casing and a second shaft portion. The casing has an opening essentially coaxial with a central axis of the second shaft portion. The assembly further includes an actuator having a housing, in which an output shaft is rotatably mounted, for actuating the actuatable element. The actuator is mounted on the casing in such a way that the second shaft portion and the output shaft are coupled together and that the second shaft portion is supported by the output shaft.

In the assembly of the invention, the shaft portion of the actuatable element, which is coupled to the output shaft of the actuator is thus also supported by the latter, whereas in conventional structures this shaft portion of the actuatable element is individually supported in a bearing in the casing wall. The suppression of this bearing simplifies the structure of the assembly, which also means a simplified assembly process and reduced manufacturing costs. Moreover, as the shaft portion which is to be coupled to the actuator output shaft is not maintained in a bearing in the casing wall, it can be more easily aligned with the output shaft of the actuator.. The mounting of the actuator to the casing is thus simplified, and the range of dimensional tolerance of the various elements of the assembly can be wider.

As mentioned above, the output shaft of the actuator achieves a double function which is to support and actuate the actuatable element. One way of doing this is by rigidly joining the output shaft and shaft portion by means of e.g. a coupling element. It is also possible to arrange a recess in the shaft portion, in which the output shaft can be inserted. However, the output shaft is preferably configured in such a way that the second shaft portion is at least partially received in the output shaft.

It is clear that in the present assembly, the actuator should preferably be fixed to the casing. The latter is thus advantageously provided with first fixing means and the actuator with cooperating second fixing means. Preferably the cooperating first and second fixing means are configured in such a way as to provide a fast-locking means, such as e.g. a twist-lock or a snap-fit, which simplifies the fixing of the actuator to the casing.

Referring more particularly to the actuator, the output shaft is preferably supported in a sleeve, the sleeve having an inner end fixedly connected to the actuator and an outer end extending towards the casing. In such a case, the first fixing means may be advantageously provided about the opening in the casing and the second fixing means about the sleeve.

Preferably, the fast-locking means is a twist-lock. In a preferred embodiment, in order to mount the actuator to the casing by means of a twist-lock, at least one radially extending gap is provided in the casing at the periphery of the opening. Moreover, the sleeve of the actuator is provided at its outer end with a radially projecting element dimensioned to be inserted through the gap in the casing and locked behind the casing wall by rotation of the actuator. This allows for an easy mounting of the actuator to the casing, without screws or any other additional fixing elements.

For limiting air leakage, the assembly is advantageously provided with sealing means that surround the opening in the casing and extend between the casing and the actuator. Such sealing means may comprise a protruding annular lip on the casing, which bears against a cooperating sealing surface of the actuator. Alternatively, the sealing means may comprise a protruding annular lip on the actuator, which bears against the casing. Furthermore, the annular lip may be replaced by an O-ring. It is to be noted that such sealing means, sandwiched between casing and actuator, also provide a kind of spring tension, which increases the robustness of the formerly described twist-lock.

Generally, the actuator will be connected to a control unit, which will activate the actuator when an actuation of the actuatable element is desire.

According to an aspect of the invention, instead of using a conventional wire bunch ending with a plug to connect the actuator to a control unit, a flexible printed circuit is attached to the casing surface and the actuator is provided with contact terminals. The flexible printed circuit comprises conductive tracks which face the actuators, In this case, the flexible printed circuit and the terminals are arranged in such a way that, by fixing the actuator to the casing, the contact terminals come into contact with the conductive tracks of the flexible printed circuit. The actuator is thus automatically connected to the control unit once mounted to the casing. Moreover, this avoids connection errors during assembly, since the electrical network formed by the flexible printed circuit is already at the right place before the actuator is mounted. In case the actuator is provided with a twist-lock, the contact terminals should of course be arranged on the actuator in such a way as to come into contact with the conductive tracks of the flexible printed circuit after activation of the twist lock, i.e. after rotation of the actuator into a locked position.

It is further to be noted that some of the tracks of the flexible printed circuit may be used for a binary coding of the actuator, in case a number of actuators are mounted to the casing. This is particularly interesting for control units using a bus system for individually controlling the different actuators.. When wire bunches and plugs are used, if no precautions are taken, connection errors may arise during assembly. When using flexible printed circuits, the connection network is already at the correct location before the actuators are mounted.

Moreover, when some of the tracks are used for codification, the actuator is automatically connected and given a codified identification as a result of assembly.

### Brief description of the drawings

The present invention will now be described, by way of example, with reference to the accompanying drawings, in which:
- Fig.1:: is a sectional view through a preferred embodiment of an assembly in accordance with the invention, wherein an actuator is mounted onto a casing;
- Fig.2:: is a partial three-dimensional view of the casing in the vicinity of the opening; and
- Fig.3:: is a three-dimensional view of the actuator of Fig.1.

In the Figures, same reference numbers indicate similar or identical elements.

### Detailed description of a preferred embodiment

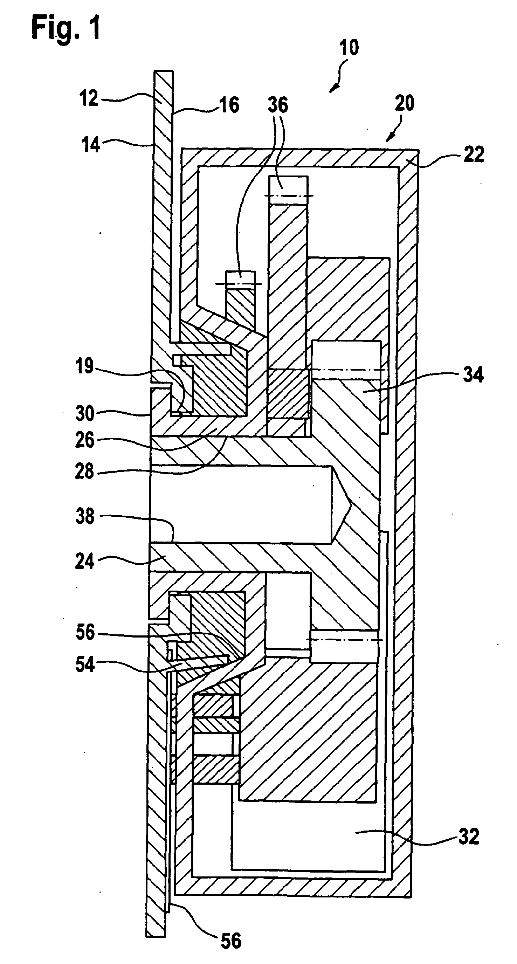

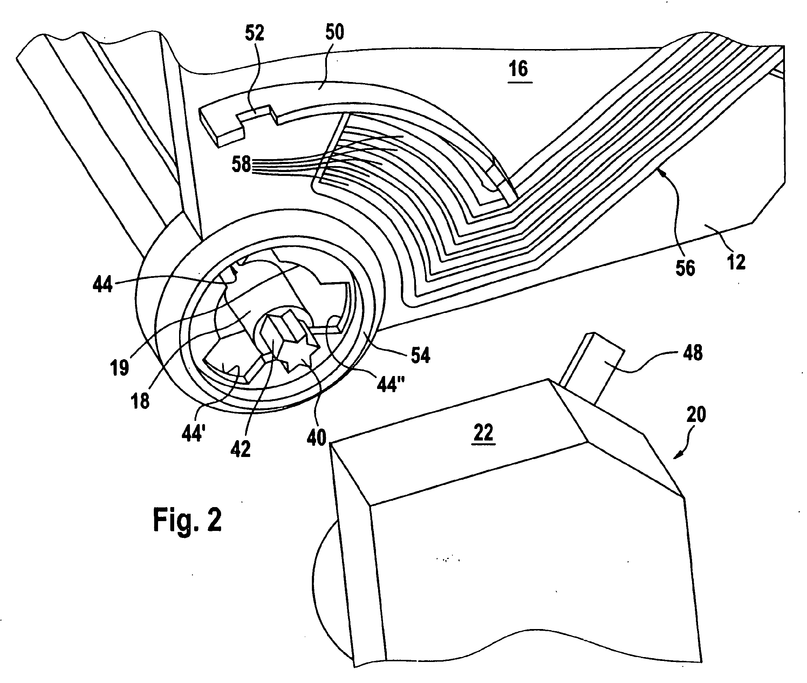

A preferred embodiment of an assembly 10 in accordance with the invention is shown in sectional view in Fig.1. Reference sign 12 indicates a casing wall, having an inner side 14 and an outer side 16. This casing may e.g. be that of a heating, ventilation and air conditioning module, within which a flap is mounted. Such a flap has two shaft portions, a first (not shown) of these shaft portions being rotatably mounted in the casing wall. The second shaft portion, indicated 18 in Fig.2 (the second shaft portion 18 is not shown in Fig.1), is coaxially aligned with an opening 19 in the casing wall 12. In order to actuate this flap, an actuator 20 is mounted onto the casing wall 12. This actuator 20 has an actuator housing 22, in which an output shaft 24 is rotatably mounted. The output shaft 24 is supported in a sleeve 26 of the actuator 20, which has an inner end 28 integral with the actuator housing 22 and an outer end 30 towards the casing. Within the actuator housing 22, the output shaft 24 is coupled to a motor 32 by means of a reducing gear system comprising a gearwheel 34 integral with the output shaft 24 and two other gearwheels 36.

It shall be appreciated that the actuator 20 is mounted onto the casing wall 12 in such a way that the second shaft portion 18 of the flap is supported by the output shaft 24. In the present embodiment, the second shaft portion 18 is received in a recess 38 in the output shaft 24. Moreover, as can be seen on Fig.2, the end 40 of the second shaft portion 18 has a profiled outer shape with a flat part 42 for orientation. The recess 38 in the output shaft 24 has a similar inner shape, whereby the second shaft portion 18 of the flap and the output shaft 24 of the actuator 20 are rotationally coupled together. The actuator 20 used in the present assembly 10 thus allows to support and actuate the flap located within the casing from the exterior thereof.

In the present embodiment, the actuator is advantageously fixed to the casing wall 12 by means of a twist-lock, which allows a rapid and easy fixation of the actuator 20. Therefore, the opening 19 in the casing wall 12 has three equally spaced peripheral gaps 44, 44' and 44", which extend radially from the periphery of the opening 19, as shown in Fig.2. As for the actuator 20, the output shaft 24 is provided at its outer end 30 with three radially extending ribs 46, 46' and 46". These ribs 46, 46' and 46"are equally spaced at the periphery of the sleeve 26 and are dimensioned so as to be inserted through the gaps 44, 44' and 44" and locked behind the casing wall 12 by rotation of the actuator 20.

For securing the actuator 20 in a locked position, the actuator 20 is advantageously provided with a tab 48, which cooperates with a sliding bar 50 on the casing wall 12. At one of its ends, the sliding bar 50 is provided with a notch 52. When mounting the actuator 20 onto the casing wall 12, the actuator 20 is positioned in such a way that the second shaft portion 18 can be received into the output shaft 24, that the ribs 46, 46' and 46" are aligned with the gaps 44, 44' and 44" in the opening 19, and that the tab 48 is located towards the end of the sliding bar 50 opposite the notch 52. This is approximately the configuration shown in Fig.2. The actuator 20 is then assembled to the casing wall 12 and locked therein by introducing the ribs 46, 46' and 46" of the output shaft 24 into the casing through the gaps 44, 44' and 44", and rotating the actuator 20. The actuator is rotated in a counter clockwise direction so that when the ribs 46, 46' and 46" are locked behind the casing wall 12 next to the gaps 44, 44' and 44", the actuator tab 48 is locked into the notch 52 in the sliding bar 50. The result of this assembly is shown in Fig.1.

It is to be noted that the actuator 20 is very easily mounted to the casing wall, without problems of alignment. Indeed, since in the present embodiment, the fixing means of the actuator 20 are provided about the opening 19 and about the output shaft 24, aligning the second shaft portion 18 with the output shaft 24 automatically leads to the alignment of the fixing means.

Reference sign 54 in Figs.1 and 2 indicates an annular lip surrounding the opening 19 and extending between the casing wall 12 and the actuator 20. This annular lip 54 bears against a conical sealing surface 56 of the actuator 20, which surrounds the sleeve 26. This structure allows an essentially airtight mounting of the actuator 20 to the casing wall 12. Moreover, it provides some kind of elasticity, which increases the robustness of the twist-lock.

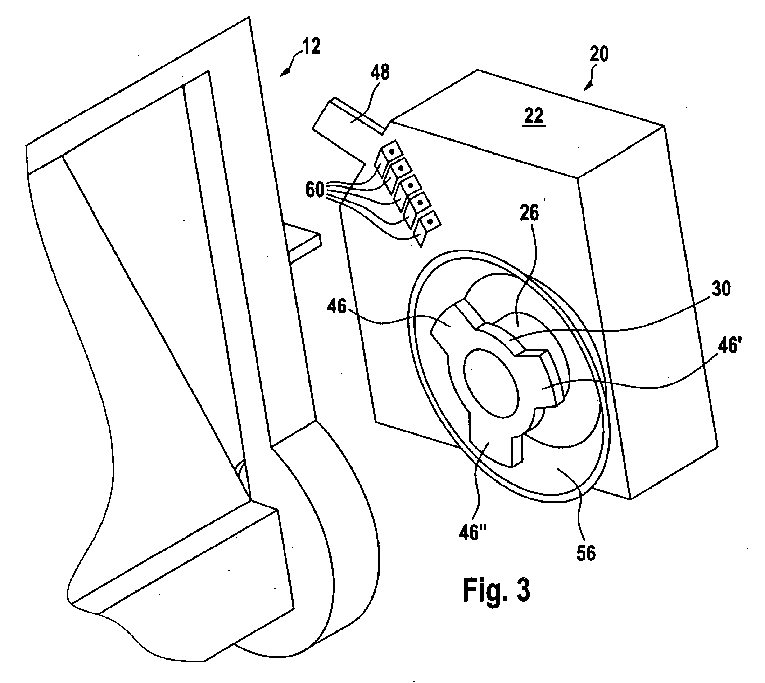

Turning again to Fig.2, reference sign 56 indicates a flexible printed circuit attached to the outer side 16 of the casing wall 12 and having conductive tracks 58 facing the actuator 20. This flexible printed circuit 56 is used instead of a conventional wire bunch ending by a plug for connecting the actuator e.g. to the regulating electronics of the HVAC module. As shown in Fig.3, the actuator 20 is provided with a series of contact terminals 60 (one for each track) arranged on the side of the actuator 20 facing the casing wall 12. These contact terminals 60 are connected to a printed circuit board inside the actuator housing 22. The flexible printed circuit 56 and the contact terminals 60 are arranged in such a way that, when the actuator 20 is locked in the opening 19 in the casing wall 12, each contact terminal 60 is in contact with its corresponding conductive track 58. The electrical connection of the actuator 20 thus automatically results from the mounting of the actuator 20 to the casing wall 12.

Although not shown in the Figures, the flexible printed circuit 56 may comprise a number of holes, which cooperate with moulded pins protruding on the outer sides of the casing for attaching the flexible printed circuit 56.

It is to be noted that an HVAC module is generally provided with a number of actuators. In such a case, there must be a way of identifying the different actuators, so that the regulating electronics can actuate them individual. The above described connection means proves very advantageous to achieve this. The flexible printed circuit extends over the whole casing to connect the different actuators. Where a bus system is employed for controlling the actuators, it is possible to use e.g. three tracks of the flexible printed circuit for a binary coding of the actuators. By mounting each actuator to the casing, the former would automatically be given an identification code.

Although in the above described embodiment the actuatable element is a flap, it is clear that the present assembly may be adapted for actuating a variety of actuatable elements mounted within a casing.

## Claims

1. An actuated element assembly, in particular an actuated element assembly of a heating, ventilation and air conditioning module in a vehicle, comprising:
an actuatable element mounted in a casing (12), said actuatable element comprising a first shaft portion rotatably mounted in said casing and a second shaft portion (18);
an opening (19) in said casing (12) essentially coaxial with a central axis of said second shaft portion (18);
an actuator (20) for actuating said actuatable element, said actuator further comprising an output shaft (24) rotatably mounted in a housing (22) of said actuator, said actuator being mounted on said casing (12) in such a way that said second shaft portion (18) and said output shaft (24) are coupled together and that said second shaft portion (18) is supported by said output shaft (24);
**characterized in that** said assembly further comprises:
a flexible printed circuit (56) attached to said casing (12), said circuit comprising conductive tracks (58) facing said actuator (20); and
a number of contact terminals (60) on said actuator;
wherein said conductive tracks (58) and said contact terminals (60) are arranged in such a way that, after fixing said actuator (20) to said casing (12), said contact terminals (60) come into contact with said conductive tracks (58) of said flexible printed circuit (56).

2. The assembly according to claim 1, wherein said second shaft portion (18) is at least partially received in said output shaft (24).

3. The assembly according to claim 1 or 2, wherein said casing (12) comprises a first fixing means and said actuator comprises a second fixing means, which cooperates with said first fixing means in such a way as to provide a fast-locking means for fixing said actuator (20) to said casing (12).

4. The assembly according to any one of the preceding claims, wherein said output shaft (24) is rotatably supported in a sleeve (26) of said actuator, said sleeve having an inner end (28) fixedly connected to said actuator (20) and an outer end (30) extending towards said casing (12).

5. The assembly according to claim 4, wherein said first fixing means is provided about said opening and said second fixing means is provided about said sleeve (26).

6. The assembly according to claim 3, 4 or 5, wherein said fast-locking means is a twist lock.

7. The assembly according to claims 4 to 6, wherein at least one radially extending gap (44, 44', 44") is provided in said casing at the periphery of said opening; and wherein said sleeve is provided at its outer end with a radially projecting element (46, 46', 46") dimensioned to be inserted through said gap inside said casing and locked behind the casing wall by rotation of said actuator.

8. The assembly according to any one of the preceding claims, comprising sealing means surrounding said opening (19) and extending between said casing (12) and said actuator (20).

9. The assembly according to claim 8, wherein said sealing means comprise a protruding annular lip (54) on said casing, which bears against a cooperating sealing surface of said actuator..

10. The assembly according to claim 8, wherein said sealing means comprise a protruding annular lip on said actuator, which bears against said casing.

11. The assembly according to any one of the preceding claims, wherein some of said conductive tracks (58) of said flexible printed circuit (56) are used for coding said actuator (20).

## Patentansprüche

1. Aktuatoraufbau, insbesondere ein Aktuatoraufbau eines Heizungs-, Ventilations- und Klimatisierungs-Moduls in einem Fahrzeug, der aufweist:
ein betätigbares Element, angebracht in einem Gehäuse (12), wobei das betätigbare Element einen ersten Wellenteil, der drehbar in dem Gehäuse angebracht ist, und einen zweiten Wellenteil (18) aufweist;
eine Öffnung (19) in dem Gehäuse (12) im Wesentlichen koaxial zu einer zentralen Achse des zweiten Wellenteils (18);
einen Aktuator (20) zum Betätigen des betätigbaren Elements, wobei der Aktuator weiter eine Abtriebswelle (24) aufweist, die drehbar in einer Einhausung (22) des Aktuators angebracht ist, wobei der Aktuator auf dem Gehäuse (12) derart angebracht ist, dass der zweite Wellenteil (18) und die Abtriebswelle (24) miteinander verbunden sind und der zweite Wellenteil (18) durch die Abtriebswelle (24) getragen wird;
**dadurch gekennzeichnet, dass** der Aufbau weiter aufweist:
eine flexible gedruckte Schaltung (56), die an dem Gehäuse (12) befestigt ist, wobei die Schaltung Leitungsbahnen (58) aufweist, die dem Aktuator (20) zugewandt sind; und
eine Anzahl von Kontaktanschlüssen (60) auf dem Aktuator;
wobei die Leitungsbahnen (58) und die Kontaktanschlüsse (60) derart angeordnet sind, dass nach der Befestigung des Aktuators (20) an dem Gehäuse (12) die Kontaktanschlüsse (60) in Kontakt kommen mit den Leitungsbahnen (58) der flexiblen gedruckten Schaltung (56).

2. Aufbau gemäß Anspruch 1, wobei der zweite Wellenteil (18) zumindest teilweise in der Abtriebswelle (24) aufgenommen wird.

3. Aufbau gemäß Anspruch 1 oder 2, wobei das Gehäuse (12) ein erstes Befestigungsmittel aufweist und der Aktuator ein zweites Befestigungsmittel aufweist, das mit dem ersten Befestigungsmittel derart zusammenarbeitet, um ein schnell arretierendes Mittel zur Befestigung des Aktuators (20) an dem Gehäuse vorzusehen.

4. Aufbau gemäß einem der vorhergehenden Ansprüche, wobei die Abtriebswelle (24) drehbar getragen wird in einer Hülse (26) des Aktuators, wobei die Hülse ein inneres Ende (28), das mit dem Aktuator (20) fest verbunden ist, und ein äußeres Ende (30) hat, das sich in Richtung des Gehäuses (12) erstreckt.

5. Aufbau gemäß Anspruch 4, wobei das erste Befestigungsmittel über der Öffnung vorgesehen ist und das zweite Befestigungsmittel über der Hülse (26) vorgesehen ist.

6. Aufbau gemäß Anspruch 3, 4 oder 5, wobei das schnell arretierende Mittel eine Drehverriegelung bzw. ein Twistlock ist.

7. Aufbau gemäß den Ansprüchen 4 bis 6, wobei zumindest eine radial sich erstreckende Lücke bzw. ein Zwischenraum (44, 44', 44") vorgesehen ist in dem Gehäuse an dem Umfang der Öffnung; und wobei die Hülse an ihrem äußeren Ende mit einem radial vorstehenden Element (46, 46', 46") versehen ist, das derart dimensioniert ist, um durch die Lücke in das Gehäuse eingeführt zu werden und hinter der Gehäusewand durch Drehung des Aktuators verriegelt wird.

8. Aufbau entsprechend einem der vorhergehenden Ansprüche, der Dichtungsmittel aufweist, welche die Öffnung (19) umgeben und sich zwischen dem Gehäuse (12) und dem Aktuator (20) erstrecken.

9. Aufbau gemäß Anspruch 8, wobei die Dichtungsmittel einen vorstehenden ringförmigen Rand (54) auf dem Gehäuse aufweisen, der gegen eine zusammenwirkende abdichtende Oberfläche des Aktuators drückt.

10. Aufbau gemäß Anspruch 8, wobei die Dichtungsmittel einen vorstehenden ringförmigen Rand auf dem Aktuator aufweisen, der gegen das Gehäuse drückt.

11. Aufbau gemäß einem der vorhergehenden Ansprüche, wobei einige der Leitungsbahnen (58) der flexiblen gedruckten Schaltung (56) zur Codierung des Aktuators (20) verwendet werden.

## Revendications

1. Ensemble à élément actionné, en particulier ensemble à élément actionné d'un module de chauffage, ventilation et conditionnement d'air dans un véhicule, comprenant :
un élément susceptible d'être actionné monté dans un boîtier (12), ledit élément susceptible d'être actionné comprenant une première portion d'arbre montée en rotation dans ledit boîtier, et une seconde portion d'arbre (18) ;
une ouverture (19) dans ledit boîtier (12), essentiellement coaxiale avec un axe central de ladite seconde portion d'arbre (18) ; un actionneur (20) pour actionner ledit élément susceptible d'être actionné, ledit actionneur comprenant en outre un arbre de sortie (24) monté en rotation dans un logement (22) dudit actionneur, ledit actionneur étant monté sur ledit boîtier (12) d'une telle façon que ladite seconde portion d'arbre (18) et ledit arbre de sortie (24) sont couplés ensemble et que ladite seconde portion d'arbre (18) est supportée par ledit arbre de sortie (24) ;
**caractérisé en ce que** ledit ensemble comprend encore :
un circuit imprimé souple (56) attaché audit boîtier (12), ledit circuit comprenant des pistes conductrices (58) en face dudit actionneur (20) ; et
un certain nombre de bornes de contact (60) sur ledit actionneur ;
dans lequel lesdites pistes conductrices (58) et lesdites bornes de contact (60) sont agencées de telle façon que, après avoir fixé ledit actionneur (20) sur ledit boîtier (12), lesdites bornes de contact (60) viennent en contact avec lesdites pistes conductrices (58) dudit circuit imprimé souple (56).

2. Ensemble selon la revendication 1, dans lequel ladite seconde portion d'arbre (18) est au moins partiellement reçue dans ledit arbre de sortie (24).

3. Ensemble selon la revendication 1 ou 2, dans lequel ledit boîtier (12) comprend un premier moyen de fixation et ledit actionneur comprend un second moyen de fixation, qui coopère avec ledit premier moyen de fixation de manière à constituer des moyens à blocage rapide pour fixer ledit actionneur (20) sur ledit boîtier (12).

4. Ensemble selon l'une quelconque des revendications précédentes, dans lequel ledit arbre de sortie (24) est supporté en rotation dans un manchon (26) dudit actionneur, ledit manchon ayant une extrémité intérieure (28) connectée de manière fixe audit actionneur (20) et une extrémité extérieure (30) s'étendant vers ledit boîtier (12).

5. Ensemble selon la revendication 4, dans lequel ledit premier moyen de fixation est prévu autour de ladite ouverture, et ledit second moyen de fixation est prévu autour dudit manchon (26).

6. Ensemble selon la revendication 3, 4 ou 5, dans lequel lesdits moyens à blocage rapide sont formés par un verrou tournant.

7. Ensemble selon les revendications 4 à 6, dans lequel au moins un intervalle s'étendant radialement (44, 44', 44") est prévu dans ledit boîtier à la périphérie de ladite ouverture ; et dans lequel ledit manchon est doté à son extrémité extérieure d'un élément en projection radiale (46, 46', 46") dimensionné pour être introduit à travers ledit intervalle à l'intérieur dudit boîtier et bloqué derrière la paroi du boîtier par rotation dudit actionneur.

8. Ensemble selon l'une quelconque des revendications précédentes, comprenant des moyens d'étanchement entourant ladite ouverture (19) et s'étendant entre ledit boîtier (12) et ledit actionneur (20).

9. Ensemble selon la revendication 8, dans lequel lesdits moyens d'étanchement comprennent une lèvre annulaire en projection (54) sur ledit boîtier, qui vient porter contre une surface d'étanchement coopérante dudit actionneur.

10. Ensemble selon la revendication 8, dans lequel lesdits moyens d'étanchement comprennent une lèvre annulaire en projection sur ledit actionneur, qui vient porter contre ledit boîtier.

11. Ensemble selon l'une quelconque des revendications précédentes, dans lequel certaines desdites pistes conductrices (58) dudit circuit imprimé souple (56) sont utilisées pour coder ledit actionneur (20).
